# EUROPEAN PATENT APPLICATION

(11) **EP 2 640 103 A1**
(43) Date of publication of application: **18.09.2013**
(21) Application number: 13460014.7
(22) Date of filing: 08.03.2013
(51) Int. Cl.: H04W 8/18

(54) **Device with SIM modules having access to profiles**

(30) Priority: 16.03.2012 PL 39848912
(71) Applicant: Telekomunikacja Polska S.A., 00-105 Warszawa (PL)
(72) Inventor: Uberna, Maciej, 05-500 Piaseczno (PL); Szostek, Lukasz, 10-685 Olsztyn (PL)
(74) Representative: Piotrowicz, Alicja

(57) **Abstract**

The input communication module (WE) is connected to buffer memory (PB), which is connected to a data presence checking system (USOD), a data origin checking system (USPD) and a processor (P) with a procedure update system (UAP). The following systems are connecter to the data processing system (UPD): a data validity checking system (USDD), a data authenticity checking system (USAD) and a blocking system (UB), which are connected to a profile storage module (MPP) with a profile modification system (UMP). A output buffer modification system (UMBW) is connected to the output buffer (BWY) having n outputs connected to n output communication modules (WY1,..., WYn).

## Description

The invention relates to two variations of a device providing subscriber identification modules with access to profiles, which enables rendering profiles accessible to one or several subscriber identification modules, being active simultaneously.

In order to improve data transmission between mobile electronic devices, particularly between subscribers of mobile phone networks, one or many subscriber identification modules are used in them - SIM (Subscriber Identity Module) cards. Such electronic devices with singular or multiple SIM cards are described in international patent applications Nos. WO 2004084561 (A2), WO 2011101709 (A1) and WO 2011104580 (A1).

The essence of a device providing subscriber identification modules with access to profiles, according to the invention, consists in that the input communication module is connected to the input of the buffer memory, the first output of which is connected to a processor connected to a procedure update system, while the second output of the buffer memory is connected, via a data presence checking system (USOD), to the processor, and the third output of the buffer memory is connected, via a data origin checking system, to the processor, which is connected to a data processing system.

The first output of the data processing system is connected to a blocking system, and its second output is connected, via a data validity checking system, to a blocking system, and the third output of the data processing system is connected, via a data authenticity checking system (USAD), to a blocking system. The output of the blocking system (UB) is connected to a profile storage module, which is connected to a profile modification system.

The output of the profile storage module (MPP) is connected to the input of the output buffer (BWY), which is connected to a output buffer modification system , and n outputs of the output buffer are connected to n output communication modules containing connectors for subscriber identification modules.

The essence of the variation of the device providing subscriber identification modules with access to profiles, according to the invention, consists in that the input communication module is connected to the input of the buffer memory. The first output of the buffer memory is connected to a processor connected to a procedure update system. The second output of the buffer memory is connected, via a data presence checking system, to the processor, and the third output of the buffer memory is connected, via a data origin checking system, to the processor.

The processor is connected to a data processing system, the first output of which is connected to a blocking system. The second output of the data processing system is connected, via a data validity checking system, to a blocking system, and the third output of the data processing system is connected, via a data authenticity checking system, to a blocking system. The output of the blocking system is connected to a profile storage module, which is connected to a profile modification system.

The output of the profile storage module is connected, via an output communication module, to a communication switch with the i^{th} subscriber identification module, where natural number i = 1, ..., n, which is connected to a modification system of the communication switch with the i^{th} subscriber identification module, while n outputs of the communication switch with the i^{th} subscriber identification module are connected to n subscriber identification modules.

The basic preferable effects of using two variations of the device providing subscriber identification modules with access to profiles, according to the invention, comparing with the prior art, consist in that they ensure reliable operation and fast and correct rendering profiles accessible to both one or several subscriber identification modules being active simultaneously at any moment of mobile phone operation, rendering dynamic transmission of profiles to single or multiple SIM cards impossible with other providers.

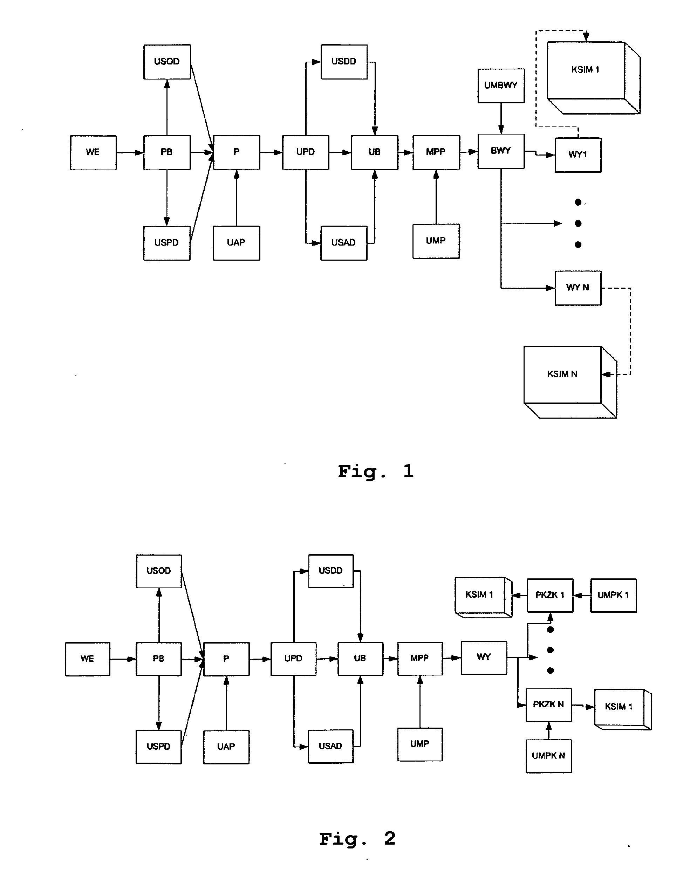

The embodiments of devices rendering profiles accessible to subscriber identification modules, according to the invention, are illustrated in the Figures, where Fig. 1 shows a block diagram of a device providing subscriber identification modules with access to profiles, and Fig. 2 - a block diagram of a variation of the device providing subscriber identification modules with access to profiles.

In one embodiment of a device providing subscriber identification modules with access to profiles, according to the invention, the input communication module WE fulfils many access functions to a mobile phone network and ensures compatibility with various types of mobile phones. The input communication module WE is connected to the input of the buffer memory PB, which stores digital electric signals modulated with alphanumeric characters representing information on mobile phone users. The first output of the buffer memory PB is connected to a processor P connected to a procedure update system UAP. The procedure update system UAP enables correction of operational parameters of the individual electronic components, introduction of changes in codes and adjustment of procedure priority to current needs. The second output of the buffer memory PB is connected, via a data presence checking system USOD, to the processor P, and the third output of the buffer memory PB is connected, via a data origin checking system USPD, to the processor P.

The processor P is connected to a data processing system UPD, the first output of which is connected to a blocking system UB. The blocking system UB prevents the mobile phone from being used by an unauthorised subscriber and ensures privacy and security of the transmitted data. The second output of the data processing system UPD is connected, via a data validity checking system USDD, to a blocking system UB. In the data validity checking system USDD, the correctness of configuration of telecommunication signals is checked, the signals being digital electric signals constituting a data packet. The completeness and coherence of the data are checked. It is checked whether the data comes from an authorised subscriber and whether any corruption of data has occurred. When irregularities in the configuration of the telecommunication signal have been ascertained, the signal is deleted. The third output of the data processing system UPD is connected, via a data authenticity checking system USAD, to a blocking system UB.

The output of the blocking system UB is connected to a profile storage module MPP, which is connected to a profile modification system UMP. Only correctly configured telecommunication signals are permitted into the profile storage module MPP, and to the profile modification system UMP, only electric signals containing data about parameters of the individual profiles, according to the provisions of the provider of the mobile phone network, are permitted.

The output of the profile storage module MPP is connected to the input of the output buffer BWY, which is connected to a output buffer modification system UMBW. Each of the n outputs of the output buffer BWY is connected to only one of n output communication modules WY1,..., WYn. Each of the n output communication modules WY1,..., WYn contains connectors ensuring electrical connection with contacts of the subscriber identification modules containing a SSN (SIM Serial Number) identification number.

In one embodiment of a variation of the device providing subscriber identification modules with access to profiles, according to the invention, the input communication module WE is connected to the input of the buffer memory PB. The first output of the buffer memory PB is connected to a processor P connected to a procedure update system UAP. The second output of the buffer memory PB is connected, via a data presence checking system USOD, to the processor P, and the third output of the buffer memory PB is connected, via a data origin checking system USPD, to the processor P.

The processor P is connected to a data processing system UPD, the first output of which is connected to a blocking system UB. The second output of the data processing system UPD is connected, via a data validity checking system USDD, to a blocking system UB, and the third output of the data processing system UPD is connected, via a data authenticity checking system USAD, to a blocking system UB. The output of the blocking system UB is connected to a profile storage module MPP, which is connected to a profile modification system UMP. To the profile modification system UMP, electric signals containing data about parameters of the individual profiles, according to the provisions of the provider of the mobile phone network, are permitted.

The output of the profile storage module MPP is connected, via an output communication module WY, to a communication switch with the i^{th} subscriber identification module PKZK, where natural number i = 1,..., n, which is connected to a modification system of the communication switch with the i^{th} subscriber identification module UMPK.

Each of the n outputs of the communication switch with the i^{th} subscriber identification module PKZK is connected to only one of n of the subscriber identification modules KSIM1,..., KSIMn.

A device providing subscriber identification modules with access to profiles, according to the invention, is suitable for use by providers of mobile phone networks in devices utilising a SIM card. One example of use of the invention is the change of a SIM card subscriber profile of a mobile device, resulting in assignment of the SIM card to a new mobile phone network provider without a physical change of the SIM card.

Though the two variations of a device providing subscriber identification modules with access to profiles, according to the invention, are defined by two claims, shown as specific embodiments in the description of the invention and reproduced in the Figures, it will be obvious to any person skilled in the art of devices rendering profiles accessible to subscriber identification modules that the data on the device rendering profiles accessible to subscriber identification modules, contained in the claims, may not be understood as limiting the inventive idea to this data only.

## Claims

1. A device providing subscriber identification modules with access to profiles, containing memory, a processor, a data processing system and connectors, **characterised in that** the input communication module (WE) is connected to the input of the buffer memory (PB), with the first output connected to a processor (P), which is connected to a procedure update system (UAP), while the second output of the buffer memory (PB) is connected, via a data presence checking system (USOD), to the processor (P), and the third output of the buffer memory (PB) is connected, via a data origin checking system (USPD), to the processor (P); the processor (P) being connected to a data processing system (UPD), the first output of which is connected to a blocking system (UB), and its second output is connected, via a data validity checking system (USDD), to a blocking system (UB), and the third output of the data processing system (UPD) is connected, via a data authenticity checking system (USAD), to a blocking system (UB), while the output of the blocking system (UB) is connected to a profile storage module (MPP), which is connected to a profile modification system (UMP), and the output of the profile storage module (MPP) is connected to the input of the output buffer (BWY), which is connected to a output buffer modification system (UMBW), while n outputs of the output buffer (BWY) are connected to n output communication modules (WY1, ..., WYn) containing connectors for the subscriber identification modules.

2. A device providing subscriber identification modules with access to profiles, containing memory, the processor, a data processing system and connectors, **characterised in that** the input communication module (WE) is connected to the input of the buffer memory (PB), having the first output connected to a processor (P) connected to a procedure update system (UAP), while the second output of the buffer memory (PB) is connected, via a data presence checking system (USOD), to the processor (P), and the third output of the buffer memory (PB) is connected, via a data origin checking system (USPD), to the processor (P) connected to a data processing system (UPD), the first output of which is connected to a blocking system (UB), and its second output is connected, via a data validity checking system (USDD), to a blocking system (UB), and the third output of the data processing system (UPD) is connected, via a data authenticity checking system (USAD), to a blocking system (UB), while the output of the blocking system (UB) is connected to a profile storage module (MPP), which is connected to a profile modification system (UMP), and the output of the profile storage module (MPP) is connected, via an output communication module (WY), to a communication switch with the i^{th} subscriber identification module (PKZK), where natural number i = 1, ..., n, which is connected to a modification system of the communication switch with the i^{th} subscriber identification module (UMPK), while n outputs of the communication switch with the i^{th} subscriber identification module (PKZK) are connected to n subscriber identification modules (KSIM1, ..., KSIMn).
